# EUROPEAN PATENT APPLICATION

(11) **EP 4 768 252 A1**
(43) Date of publication of application: **01.07.2026**
(21) Application number: 24872652.3
(22) Date of filing: 18.06.2024
(51) Int. Cl.: B41F 15/36, B41F 15/44, B41F 21/06, B41F 15/12, B41F 19/00, B41F 15/20, B41N 1/24, B41N 1/04, B41F 33/00

(54) **FILM-TYPE EDIBLE PRODUCTS AND APPARATUS FOR MANUFACTURING FILM-TYPE EDIBLE PRODUCTS**

(30) Priority: 27.09.2023 KR 20230130800
(71) Applicant: People & Technology Inc., Gumi-si, Gyeongsangbuk-do 39422 (KR)
(72) Inventor: KIM, Joonsup, Gumi-si, Gyeongsangbuk-do 39422 (KR); SHIN, Soonwoo, Gumi-si, Gyeongsangbuk-do 39212 (KR); LEE, Byeong Geun, Chilgok-gun, Gyeongsangbuk-do 39823 (KR)
(74) Representative: BCKIP Part mbB
(86) International application number: PCT/KR2024/008379
(87) International publication number: WO 2025/070940

(57) **Abstract**

The present invention relates to film-type edible products and an apparatus for manufacturing the film-type edible products. The apparatus for manufacturing the film-type edible products comprises: a metal mask having a plurality of printing holes; a lower substrate supply unit that supplies a lower substrate below the metal mask; a printing unit that spreads externally supplied paste-like edible raw materials on the upper surface of the metal mask, thereby printing the edible raw materials on the lower substrate via the printing holes; a drying unit for drying the edible printed materials on the lower substrate; an upper substrate supply unit that supplies an upper substrate for covering the upper portion of the lower substrate; a fusing unit that fuses the lower substrate and the upper substrate; and a cutting unit that cuts the fused upper and lower substrates to separate the edible printed materials into individual pieces. According to the film-type edible products and the apparatus for manufacturing the film-type edible products according to the present invention as described above, edible films are manufactured by a printing method using the metal mask, and thus edible products of various shapes can be produced. Also, overprinting is possible through aligning of the metal mask, and thus the thickness of the edible film itself can be adjusted. Furthermore, the raw materials in the paste phase are only ejected just before printing, and thus viscosity changes in the raw materials can be minimized since the time of contact between the raw materials and air is short.

## Description

### [Technical Field]

The present invention relates to an edible film product. More specifically, it relates to an edible film product with excellent marketability due to its various shapes and thicknesses, and an apparatus for manufacturing edible products capable of continuously producing edible film products of various shapes.

### [Background Art]

An edible film product is a product formed into a thin film after mixing various food raw materials and has a size that can be put in the mouth.

When an edible film product is attached to the tongue, for example, it gradually dissolves, and the substances inside the product are absorbed into the body.
There are various types of edible film products depending on the purpose, such as those for removing bad breath, dental hygiene, or refreshing the mouth after a meal. However, since edible film products take the form of a thin film, they have the disadvantage of being sensitive to moisture, so they are generally sealed and packaged one by one.

As an apparatus for manufacturing such edible film products, Korean Registered Patent Publication No. 10-1214140 (Method and Apparatus for Manufacturing Edible Film Products) has been disclosed.

However, the disclosed manufacturing method has a slow production speed and is produced in a pick-and-place manner by cutting dried edible films individually into rectangular shapes, making it impossible to implement various shapes of the edible film. In other words, only simple rectangular shapes can be produced. Additionally, since the coating of raw materials is performed at once, there is a disadvantage in that when a small amount of raw material is loaded, the loss of usable raw materials is high compared to the input amount.

Furthermore, manufacturing apparatuses using a metal mask printing method are also used. However, conventional metal mask-type manufacturing apparatuses have difficulty printing products with printing patterns having wide openings. Because raw materials are poured onto the metal mask at once for printing, the paste-like material is exposed on the metal mask for a long time, making it vulnerable to contamination. In addition, there are problems such as difficulty in producing products of uniform quality due to changes in the viscosity of raw materials and high loss of raw materials.

Besides, while roll-to-roll manufacturing apparatuses are advantageous for mass production, continuous coating while maintaining a constant pattern pitch is limited due to the size of the rectangular frame of the metal mask, and they have the disadvantage that the printed pattern touches the roll or other mechanisms.

### [Detailed Description of the Invention]

### [Technical Problem]

An object of the present invention is to provide an apparatus for manufacturing a film-type edible product capable of producing edible products of various shapes and thicknesses.

Another object of the present invention is to provide an apparatus for manufacturing a film-type edible product that can minimize the change in viscosity of raw materials by discharging paste-like raw materials only immediately before printing, thereby shortening the contact time of the raw materials with air.

### [Technical Solution]

As a technical solution for achieving the above object, a film-type edible product according to the present invention is manufactured by a screen printing method using a metal mask having a plurality of printing holes formed therein, and comprises:
an edible product body having a predetermined thickness reflecting the shape of the printing holes; and
a packaging material configured to hermetically accommodate the product body.

In addition, the edible product body has a multilayer structure.

Further, as a means for solving the problem to achieve the above object, an apparatus for manufacturing a film-type edible product according to the present invention comprises: a metal mask having a plurality of printing holes formed therein; a lower substrate supply unit configured to supply a lower substrate below the metal mask; a printing unit configured to spread an edible raw material in a paste state supplied from the outside on an upper surface of the metal mask so that the edible raw material is printed onto the lower substrate through the printing holes; a drying unit configured to dry the edible printed material printed on the lower substrate; an upper substrate supply unit configured to supply an upper substrate to cover the upper side of the lower substrate; a fusion unit configured to fuse the lower substrate and the upper substrate; and a cutting unit configured to cut the fused upper and lower substrates to separate the edible printed material into individual pieces.

Further, a secondary printing unit is additionally included between the drying unit and the fusion unit, the secondary printing unit being configured to print another edible raw material again on an upper surface of the edible printed material printed on the lower substrate.

As another means for solving the problem to achieve the above object, another apparatus for manufacturing a film-type edible product according to the present invention comprises: a lower substrate supply unit configured to supply a lower substrate having a predetermined width; a first printing unit configured to allow the lower substrate supplied from the lower substrate supply unit to pass therethrough while printing an edible raw material in a paste state on an upper surface of the lower substrate to obtain an edible first printed material; a first drying unit configured to heat and dry the first printed material;
a second printing unit configured to allow the lower substrate passing through the first drying unit to pass therethrough while printing an edible raw material in a paste state on an upper surface of the first printed material so as to laminate an edible second printed material on the first printed material; a second drying unit configured to heat and dry the second printed material; an upper substrate supply unit configured to supply an upper substrate corresponding to the lower substrate; a fusion unit configured to fuse and couple the upper substrate to the lower substrate; and a cutting unit configured to cut a laminated body of the fused upper and lower substrates so as to separate the laminated first and second printed materials into individual pieces.

Further, an inspection device for detecting a laminated state of the first printed material and the second printed material is additionally provided on an upstream side of the fusion unit, and a punching unit for punching holes in the first and second printed materials when the inspection result indicates that the laminated state of the first and second printed materials is defective is provided on a downstream side of the fusion unit.

Further, the first printing unit and the second printing unit comprise: a support structure providing supporting force; a transport guide means mounted on the support structure and configured to guide transport of the lower substrate passing through the support structure; a substrate support part installed under a transport path of the lower substrate and configured to support the lower substrate during printing of the edible raw material; a metal mask provided above the transport path of the lower substrate so as to be position-adjustable and having a plurality of printing holes through which the edible raw material passes; and
a printing unit configured to supply the edible raw material onto an upper part of the metal mask and to spread the supplied edible raw material on the metal mask so that the edible raw material is filled in the printing holes.

Further, the transport guide means comprises: a horizontal holding roll configured to horizontally support the lower substrate between the substrate support part and the metal mask; and a suction roll installed at a lower height than the horizontal holding roll and configured to transport the lower substrate while adsorbing a lower surface of the lower substrate after the lower substrate passes between the substrate support part and the metal mask.

Further, the first printed materials are arranged at predetermined intervals in a width direction and a transport direction of the lower substrate, and a pressing roller is additionally provided on a downstream side of the suction roll, the pressing roller being configured to contact an upper surface of the lower substrate passing through the suction roll and support the lower substrate downward, and having a pressing ring portion on an outer circumferential surface thereof that closely contacts the lower substrate while avoiding the printed materials on the upper surface of the lower substrate.

Further, the substrate support part comprises: a support base fixed to the support structure; a suction horizontal plate installed above the support base so as to be vertically movable and configured to contact a lower surface of the lower substrate in a raised state and adsorb the lower substrate; and a suction plate cylinder configured to vertically move the suction horizontal plate.

Further, the printing unit comprises: a reciprocating beam reciprocating in a direction orthogonal to a transport direction of the lower substrate; an elevating support plate mounted on the reciprocating beam so as to be vertically movable; a pair of squeegees disposed parallel to each other at a lower portion of the elevating support plate and each having a squeezing blade at a lower end thereof; a blade cylinder configured to alternately lower the squeegees so that the squeezing blade comes into line contact with the metal mask; and a raw material discharge unit installed between the two squeegees and configured to discharge the edible raw material in a paste state supplied from the outside onto the upper surface of the metal mask.

Further, the raw material discharge unit comprises: a bank configured to accommodate the edible raw material; and a slit die having one or more discharge slits configured to discharge the edible raw material in the bank in a band shape having a predetermined width.

### [Advantageous Effects]

According to the present invention, since the edible film is manufactured by a printing method using a metal mask, edible products having various shapes can be produced.

Further, by aligning the metal mask, overlapping printing can be performed, thereby enabling adjustment of the thickness of the edible film itself.

Furthermore, since the paste-type raw material is discharged only immediately before printing, the contact time between the raw material and air is shortened, thereby minimizing changes in viscosity of the raw material.

### [Description of Drawings]

FIG. 1 is a perspective view illustrating a basic structure of a film-type edible product according to an embodiment of the present invention.
FIGS. 2a to 2f are partially cut-away plan views illustrating various modified examples of the film-type edible product according to an embodiment of the present invention.
FIG. 3 is a view illustrating an overall configuration of an apparatus for manufacturing a film-type edible product according to an embodiment of the present invention.
FIG. 4 is a perspective view separately illustrating a first printing unit and a part of a heating dryer of FIG. 3.
FIG. 5 is a front view of the first printing unit and the heating dryer of FIG. 4.
FIG. 6 is an exploded perspective view illustrating a transport path of a lower substrate passing through the first printing unit of FIG. 4.
FIG. 7 is a view illustrating an exploded configuration of a printing unit and a substrate support part in the first printing unit of FIG. 4.
FIGS. 8 and 9 are perspective views for explaining a position adjustment method of the metal mask shown in FIG. 7.
FIG. 10 is a view separately illustrating the metal mask and a printing head of FIG. 7.
FIG. 11 is a side view of the printing head shown in FIG. 10.
FIG. 12 is an exploded perspective view of the slit die shown in FIG. 11.
FIGS. 13a and 13b are views for explaining an operation of the printing head of FIG. 10.
FIGS. 14 and 15 are views for explaining a relative arrangement of rollers inside the first printing unit shown in FIG. 4.
FIG. 16 is a partially cut-away exploded perspective view of the suction roll shown in FIG. 14.
FIG. 17 is a view illustrating a modified example of the metal mask applicable to the first printing unit shown in FIG. 4.

### [Best Mode]

Hereinafter, an embodiment according to the present invention will be described in greater detail with reference to the accompanying drawings.

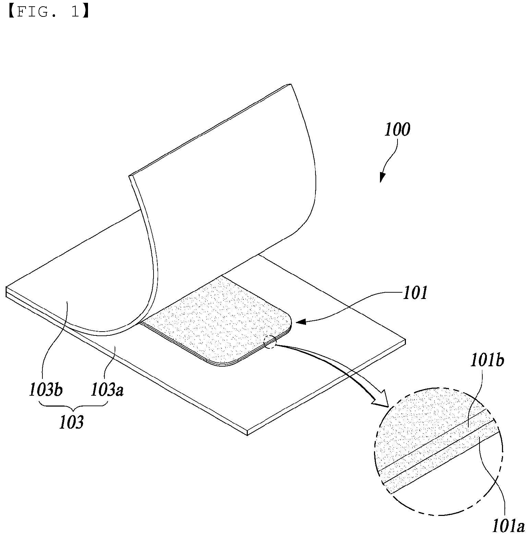

FIG. 1 is a perspective view illustrating a basic structure of a film-type edible product according to an embodiment of the present invention.

As shown in the drawing, the film-type edible product 100 according to the present embodiment includes a product body 101 and a packaging material 103.

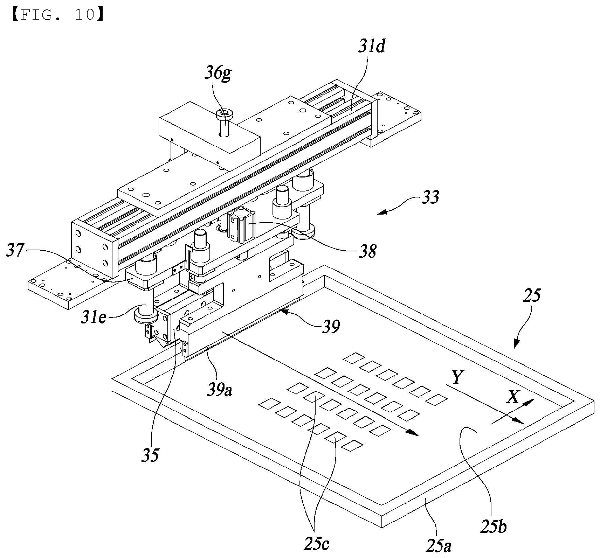

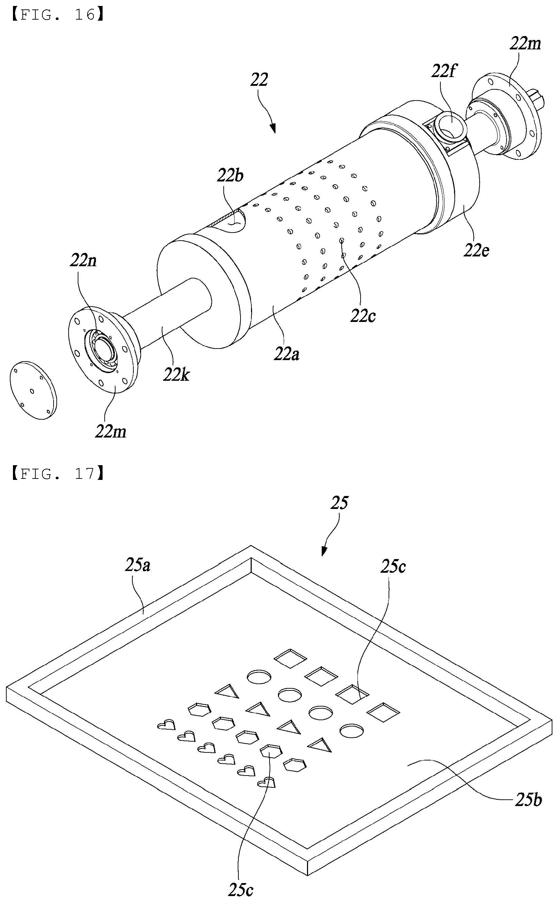

The product body 101 is manufactured by printing an edible raw material using, so to speak, a screen printing method. In other words, the product body 101 is produced by introducing a paste-state edible raw material into a metal mask having a plurality of printing holes and performing screen printing. The metal mask may be, for example, the metal mask 25 of the type illustrated in FIG. 10 or FIG. 17. Naturally, the shape of the product body 101 reflects the shape of the printing holes 25c of the metal mask. Since the edible raw material itself is conventional, a detailed description thereof will be omitted.

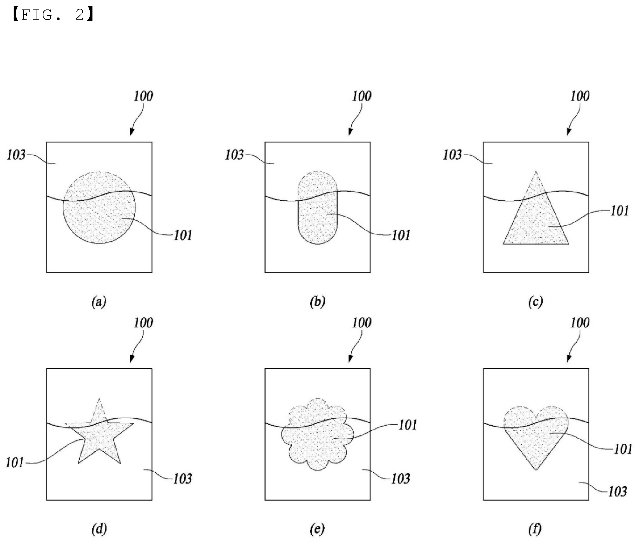

Since the product body 101 is manufactured using the printing method employing the metal mask as described above, the shape of the product body 101 may be very diverse, as illustrated in FIG. 2. For reference, a conventional edible product manufacturing apparatus has a structure in which an edible raw material is flattened into a wide sheet form and the spread sheet is cut along a plurality of straight lines orthogonal to each other to separate the sheet into individual pieces. Accordingly, conventional edible products typically have a simple rectangular shape. For example, shapes such as circular shapes, clover shapes, triangular shapes, or star shapes cannot be manufactured.

Although various shapes of edible products may be cut out using a Thomson blade, this method causes a large amount of loss of edible raw material, resulting in very low industrial productivity and efficiency. Furthermore, edible products having a laminated structure cannot be produced by such a method.

In particular, the film-type edible product 100 according to the present embodiment may have a laminated structure (although a single-layer structure may of course also be produced). For example, as shown in FIG. 1, a first printed layer 101a may be formed first, and a second printed layer 101b may be laminated on the first printed layer 101a.
The edible material of the first printed layer 101a and the edible material of the second printed layer 101b may be the same or different.

When the edible materials are the same, this means that the thickness of the first printed layer 101a may initially be thin and then increased through additional printing. When the edible materials are different, it means that materials having different functions or effects may be combined and ingested together at once.

Although FIG. 1 illustrates a laminated structure having two layers, the number of laminated layers may vary. For example, three or more layers may be formed.

The packaging material 13 is a sealing sheet configured to hermetically accommodate the product body 101. A lower packaging sheet 103a constituting the packaging material 13 is obtained by cutting a lower substrate 13 to be described later, and an upper packaging sheet 103b is obtained by cutting an upper substrate 14 into a rectangular shape.

FIGS. 2a to 2f are partially cut-away plan views illustrating various modified examples of the film-type edible product according to an embodiment of the present invention.

As shown in FIGS. 2a to 2f, the product body 101 of the film-type edible product 100 according to the present embodiment may have various shapes. That is, the product body 101 may be manufactured in shapes such as a circular shape, an elliptical shape, a triangular shape, a star shape, a cloud shape, or a heart shape. The reason that the product body 101 may be produced in such various shapes is that the product body 101 is manufactured by a screen printing method using a metal plate. The metal plate that may be used may have, for example, the structure illustrated in FIG. 17.

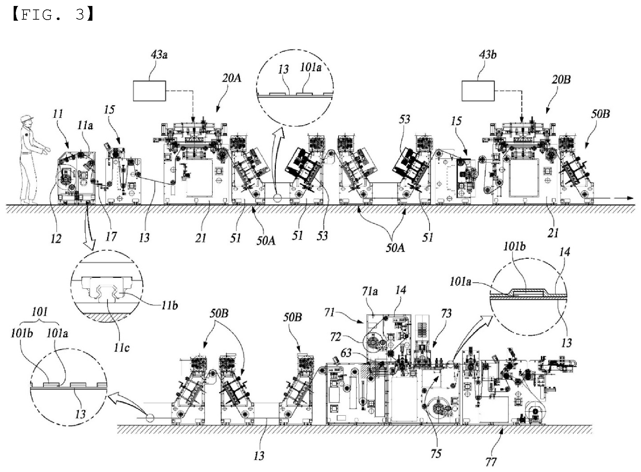

FIG. 3 is a view illustrating the overall configuration of an apparatus for manufacturing a film-type edible product according to an embodiment of the present invention.

The edible product manufacturing apparatus according to the present embodiment includes a metal mask, a lower substrate supply unit, a printing unit, a drying unit, a fusion unit, and a cutting unit.

The metal mask 25 is a member installed in the first printing unit 20A and the second printing unit 20B so as to be position-adjustable, and has a plurality of printing holes 25c.

The lower substrate supply unit 11 supplies a lower substrate below the metal mask 25. The lower substrate supplied from the lower substrate supply unit 11 sequentially passes beneath the metal mask of the first printing unit and the metal mask of the second printing unit.

The printing unit spreads an edible raw material in a paste state supplied from the outside on an upper surface of the metal mask so that the edible raw material is printed on the lower substrate through the printing holes 25c, and includes the first printing unit 20A and the second printing unit 20B.

The drying unit dries the edible printed material printed on the lower substrate and includes a first drying unit 50A and a second drying unit 50B. The first and second drying units are arranged in series and heat the lower substrate while the lower substrate passes therethrough.

The upper substrate supply unit 71 supplies an upper substrate configured to cover an upper portion of the lower substrate and includes a bobbin 72. The upper substrate 14 wound around the bobbin 72 is unwound and covers the upper side of the lower substrate.

The fusion unit 73 fuses the lower substrate 13 and the upper substrate 14, and the cutting unit 77 cuts the fused upper and lower substrates to separate the edible printed materials into individual pieces. The configuration described above will be explained in more detail as follows.

As illustrated, the edible product manufacturing apparatus according to the present embodiment includes the lower substrate supply unit 11, a tension maintaining unit 15, the first printing unit 20A, a first raw material supply unit 43a, a multi-stage first drying unit 50A, the second printing unit 20B, a second raw material supply unit 43b, a multi-stage second drying unit 50B, an upper substrate supply unit 71, an inspection device 63, the fusion unit 73, a punching unit 75, and the cutting unit 77.

The edible product manufacturing apparatus having the above configuration continuously produces the edible product 100 having the structure illustrated in FIG. 1.
In particular, defective products determined during the manufacturing process are discharged in a state in which holes are punched by the punching unit 75. An operator collects and discards the defective products having holes among the discharged products.

The lower substrate supply unit 11 supplies the lower substrate 13 wound around a bobbin 12. A slider 11b is provided at a lower portion of a housing 11a of the lower substrate supply unit 11. The slider 11b is a linear member extending in a direction orthogonal to a traveling direction of the lower substrate (hereinafter referred to as a width direction) and is supported on a rail 11c on the ground.

The lower substrate supply unit 11 may be position-adjusted in the width direction while being supported on the rail 11c. When the width-direction position of the lower substrate supply unit 11 is adjusted, the width-direction position of the lower substrate 13 being transported is adjusted accordingly. A separate driving unit (not shown) is installed inside the housing 11a to adjust the position of the lower substrate supply unit 11.

An EPC sensor 17 is installed on a downstream side of the lower substrate supply unit 11. The EPC sensor 17 detects the position of a width-direction edge line of the lower substrate 13 being transported. Detection information from the EPC sensor 17 is transmitted to a controller (not shown). When the EPC sensor 17 detects eccentricity of the lower substrate, the controller returns the lower substrate supply unit 11 to a correct position.

The tension maintaining unit 15 maintains a constant tension of the lower substrate being transported. The tension maintaining unit 15 is installed at multiple locations. For example, it may be installed upstream of the first and second printing units 20A and 20B or upstream of the upper substrate supply unit 71. The tension maintaining unit 15 pulls the lower substrate 13, which repeatedly stops and moves, so that the lower substrate remains in a taut state.

Meanwhile, the first printing unit 20A prints the first printed layer 101a on the upper surface of the supplied lower substrate 13. That is, the first printing unit 20A allows the lower substrate 13 supplied from the lower substrate supply unit 11 to pass therethrough and prints an edible raw material in a paste state on the upper surface of the lower substrate to form the edible first printed layer 101a.

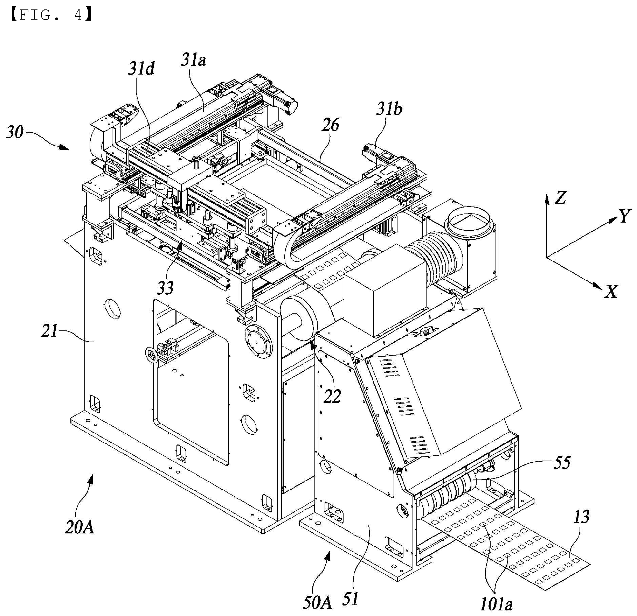

The configuration and operating principle of the first printing unit 20A will now be described with reference to FIGS. 4 to 17. For reference, the structures of the first printing unit 20A and the second printing unit 20B are identical. Accordingly, for convenience of description and to avoid redundant explanation, the description relating to the second printing unit 20B will be replaced by the description of the first printing unit 20A.

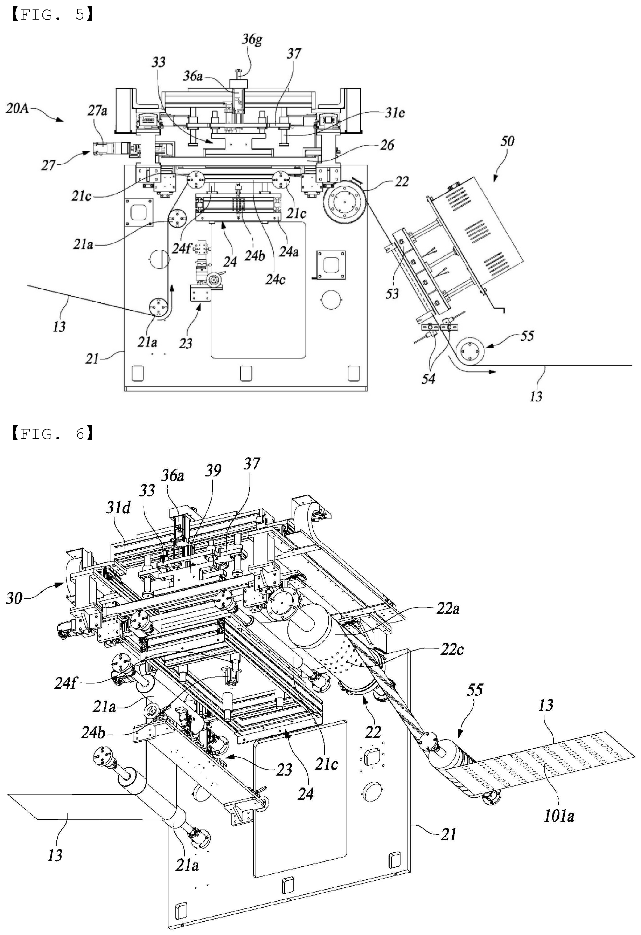

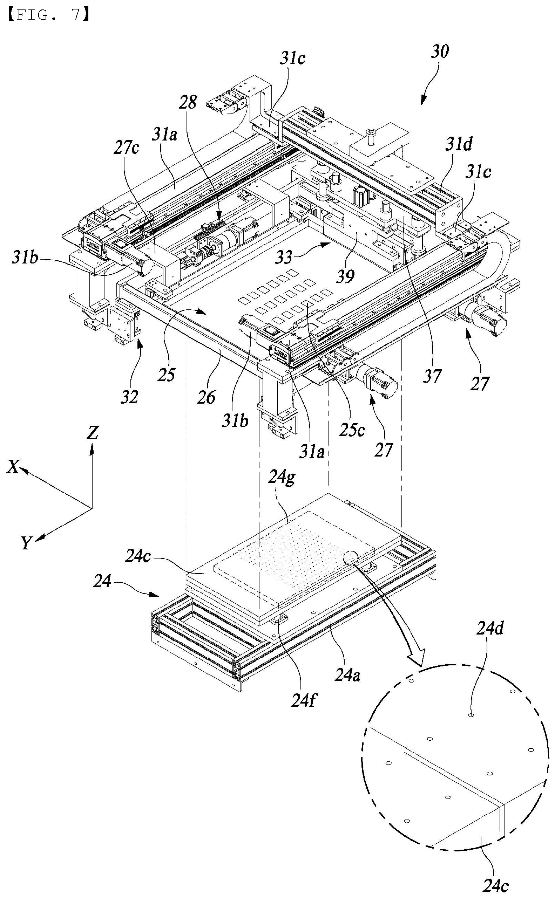

FIG. 4 is a perspective view separately illustrating the first printing unit and a portion of the heating dryer shown in FIG. 3, and FIG. 5 is a front view of the first printing unit and the heating dryer of FIG. 4. FIG. 6 illustrates a transport path of the lower substrate passing through the first printing unit, and FIG. 7 is an exploded view illustrating a printing unit and a substrate support part in the first printing unit.

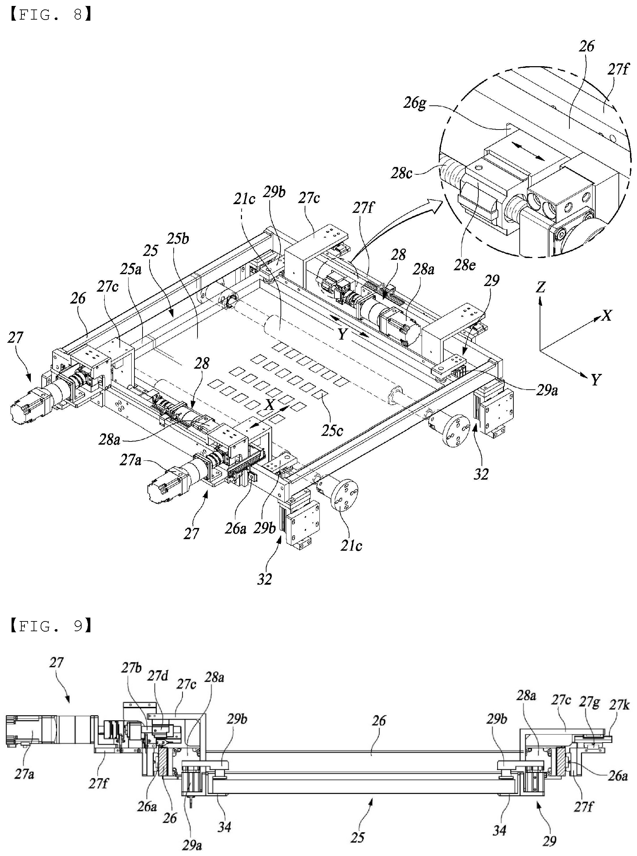

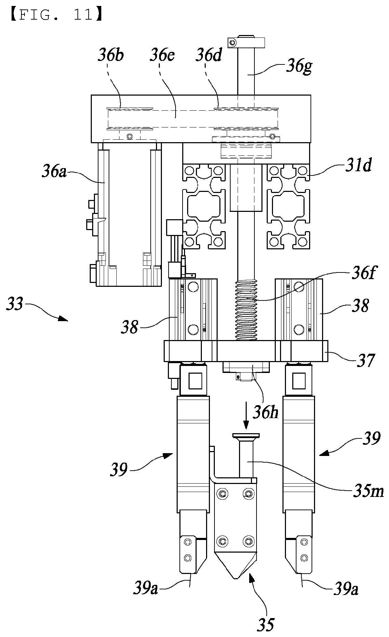

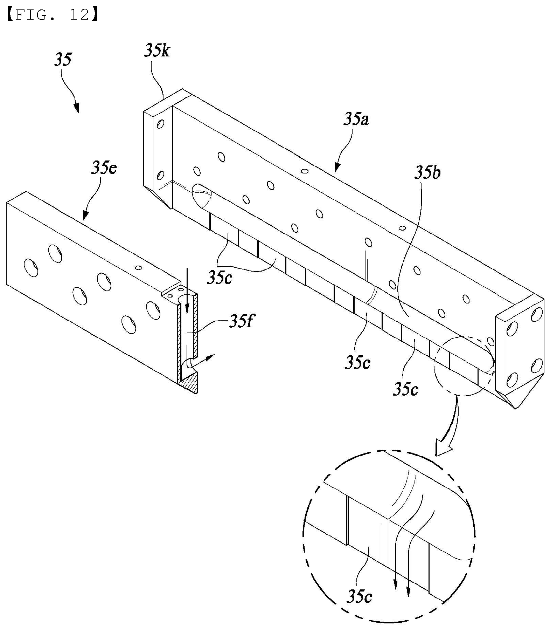

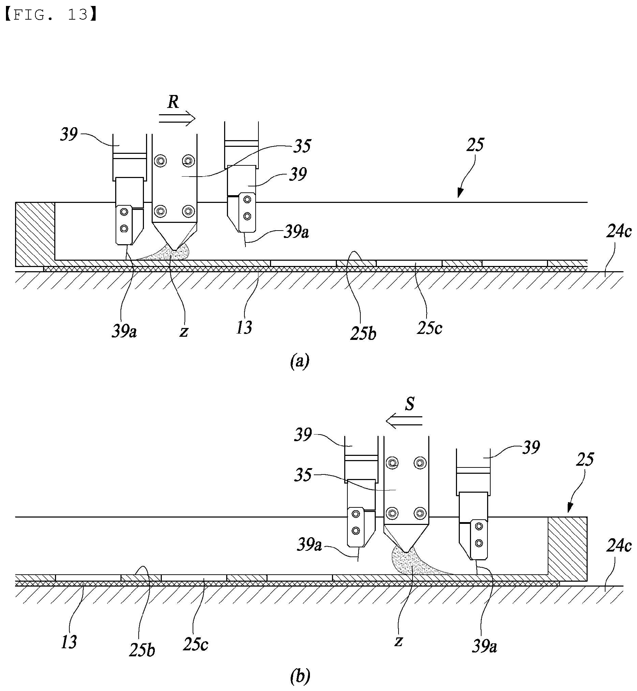

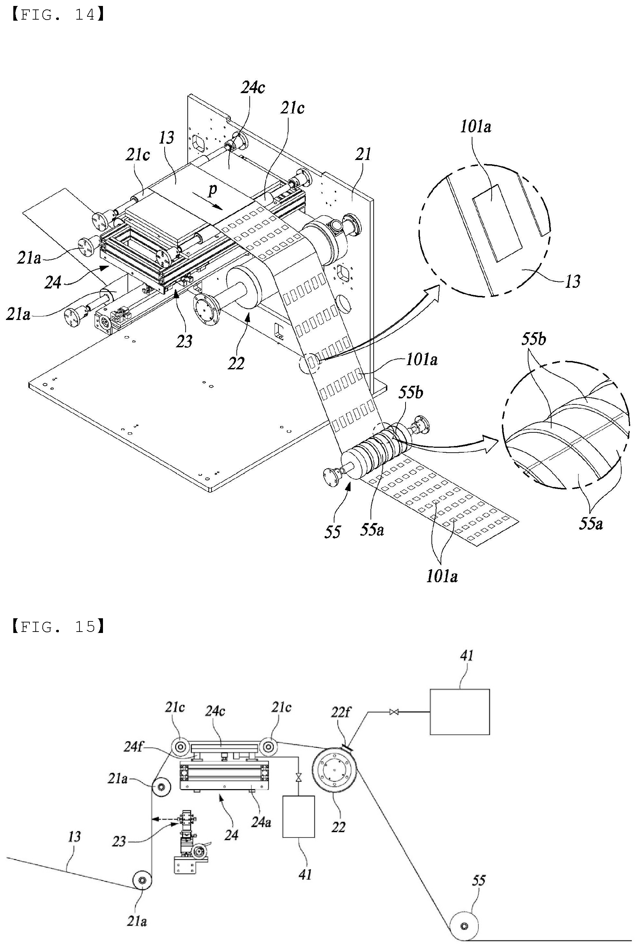

FIGS. 8 and 9 are perspective views for explaining a position adjustment method of the metal mask shown in FIG. 7, and FIG. 10 is a view separately illustrating the metal mask and a printing head. FIG. 11 is a side view of the printing head shown in FIG. 10, and FIG. 12 is an exploded perspective view of the slit die shown in FIG. 11. FIGS. 13a and 13b are views for explaining the operation of the printing head of FIG. 10. FIGS. 14 and 15 are views illustrating a relative arrangement of rollers inside the first printing unit, and FIG. 16 is a partially cut-away exploded perspective view of the suction roll shown in FIG. 14. FIG. 17 illustrates a modified example of a metal mask applicable to the first printing unit shown in FIG. 4.

As illustrated, the first printing unit 20A includes a support structure 21, a transport guide means, a substrate support part 24, a metal mask 25, and a printing unit 30.

The support structure 21 is a fixed body erected on the ground and serves as a frame supporting other components.

The transport guide means is mounted inside the support structure 21 and guides transport of the lower substrate 13 passing through the support structure 21. The transport guide means includes two guide rolls 21a, a horizontal holding roll 21c, and a suction roll 22.

As shown in FIG. 5, the guide rolls 21a are arranged vertically and guide the lower substrate 13 entering the first printing unit 20A toward the horizontal holding roll 21c.

The horizontal holding roll 21c serves to horizontally support the lower substrate 13 between the substrate support part 24 and the metal mask 25. Two horizontal holding rolls 21c form one set and are symmetrically arranged with the suction horizontal plate 24c of the substrate support part 24 positioned therebetween. The lower substrate located between the horizontal holding rolls maintains a horizontal state and is parallel to the suction horizontal plate 24c.

The suction roll 22 is installed at a lower height than the horizontal holding roll 21c and transports the lower substrate 13 while adsorbing a lower surface of the lower substrate after the lower substrate passes between the substrate support part 24 and the metal mask. The fact that the suction roll 22 is installed at a lower height than the horizontal holding roll 21c means that it is located at a lower position relative to the ground. In the drawing of FIG. 5, an imaginary line connecting the rotational center axis of the right horizontal holding roll 21c and the rotational center axis of the suction roll 22 may form an angle of 5° to 70° with respect to a horizontal line, preferably 10° to 30°.

The suction roll 22 is illustrated separately in FIG. 16.

As illustrated, the suction roll 22 includes an adsorption drum 22a, a connection ring 22e, a roll shaft 22k, and a fixed disk 22m. As shown in FIG. 15, the suction roll 22 is connected to a vacuum pump 41. According to operation of the vacuum pump 41, the lower substrate 13 is adsorbed onto an outer circumferential surface of the suction roll 22.

The adsorption drum 22a is a hollow cylindrical member having a predetermined diameter and includes an internal space 22b. A plurality of micro-holes 22c are formed along the circumferential surface of the adsorption drum 22a. The micro-holes 22c serve as passages through which external air is drawn into the adsorption drum 22a when the internal pressure of the space 22b decreases.

The connection ring 22e is a ring-shaped member fixed to one end of the adsorption drum 22a and includes a suction hole 22f. The suction hole 22f is an opening to which an external vacuum pump is connected. When the vacuum pump operates, air within the space 22b is discharged through the suction hole 22f, thereby forming negative pressure within the space 22b. Accordingly, external air flows into the space 22b.

As the adsorption drum 22a maintains negative pressure, the lower substrate 13 contacting the outer circumferential surface of the adsorption drum 22a is closely attached to the outer surface due to the negative pressure. Since the lower substrate 13 is transported in an adsorbed state, stable tension is maintained and slip or meandering is prevented. When the suction roll 22 rotates in this state, the rotational force of the suction roll 22 is transmitted to the lower substrate 13.

The roll shaft 22k is a horizontal shaft whose one end is fixed to the adsorption drum 22a and the connection ring 22e, while the other end is supported by the support structure 21 through the fixed disk 22m so as to be rotatable about its axis. A bearing 22n is installed between the roll shaft 22k and the fixed disk 22m. The roll shaft 22k is rotatable while being supported by the bearing 22n.

Meanwhile, the substrate support part 24 is installed below the transport path of the lower substrate 13 and supports the lower substrate during printing of the edible raw material. In other words, it prevents the lower substrate 13 from sagging downward.

The substrate support part 24 includes a support base 24a, a suction horizontal plate 24c, vertical rods 24f, and a suction plate cylinder 24b.

The support base 24a has a rectangular frame shape and is horizontally fixed inside the support structure 21. The support base 24a supports the vertical rods 24f so as to allow vertical movement. The vertical rods 24f are vertically extending round bars supported by the support base 24a. The suction horizontal plate 24c is fixed to upper ends of the vertical rods 24f.

The suction horizontal plate 24c is a rectangular horizontal plate capable of vertical movement above the support base 24a. As shown in FIG. 7, a negative pressure space 24g is formed inside the suction horizontal plate 24c. The negative pressure space 24g is connected to the external vacuum pump 41 and is opened upward through a plurality of suction holes 24d. Accordingly, when the internal pressure of the negative pressure space 24g is reduced through the vacuum pump 41, air above the suction horizontal plate 24c is drawn into the suction horizontal plate.

When the suction horizontal plate 24c is raised and brought into close contact with a lower surface of the lower substrate 13 and the vacuum pump 41 is operated, the lower substrate 13 is fixed onto the upper surface of the suction horizontal plate 24c by negative pressure. When the vacuum pump is stopped, the adsorption is released.

The suction plate cylinder 24b moves the suction horizontal plate 24c upward and downward. Through the suction plate cylinder 24b, the suction horizontal plate 24c is raised or lowered within a predetermined stroke range.

Reference numeral 23 in FIG. 5 denotes a vision sensor. The vision sensor 23 detects the accuracy of the moving distance of the lower substrate 13 in a longitudinal direction (transport direction). The lower substrate 13 is transported not at a constant speed but through so-called step feeding, in which movement and stopping are repeated. The distance moved in one step feeding operation is referred to as a pitch distance. The vision sensor detects the step feeding distance. In other words, it senses whether the lower substrate is transported by a predetermined pitch distance. To enable this detection, marks (not shown) spaced at predetermined intervals in the longitudinal direction are formed on the lower surface of the lower substrate 13.

Meanwhile, the metal mask 25 is a rectangular frame provided above the transport path of the lower substrate 13 and is configured to be position-adjustable in X, Y, and Z directions. The metal mask 25 is positioned vertically above the substrate support part 24.

The metal mask 25 includes a mask plate 25b having a predetermined thickness and side walls 25a.

A lower surface of the mask plate 25b is horizontal and may be brought into close contact with an upper surface of the lower substrate 13. The thickness of the mask plate 25b may vary. As the thickness of the mask plate 25b increases, the thickness of the first printed material 101a or the second printed material 101b increases.

A plurality of printing holes 25c are formed at a central portion of the mask plate 25b. The printing holes 25c are square through-holes arranged at predetermined intervals in X and Y directions. Accordingly, the first printed material 101a or the second printed material 101b printed on the lower substrate are also arranged at predetermined intervals in the width direction and the transport direction of the lower substrate.

The side walls 25a form a rectangular frame fixed around an upper surface of the mask plate 25b and prevent the edible raw material Z introduced onto the mask plate 25b from flowing outward.

FIG. 17 illustrates a modified example of the metal mask 25.

As shown in FIG. 17, the printing holes 25c may have various shapes. In FIG. 17, the printing holes 25c have shapes such as hearts, hexagons, triangles, circles, and rectangles. By applying various shapes to the printing holes 25c, the commercial value of the product body 101 may be enhanced.

The metal mask 25 is configured to be position-adjustable in X, Y, and Z directions through a metal mask position adjusting means, as illustrated in FIG. 8. In other words, three-dimensional movement in front-rear, left-right, and up-down directions is possible.

The reason for enabling position adjustment of the metal mask 25 in the X direction is to compensate for errors that may occur in the transport distance of the lower substrate 13 in the transport direction. As described above, the lower substrate 13 is step-fed by a predetermined pitch distance. When an error occurs in the pitch distance due to slipping or other causes, the error may be compensated. For example, when the input pitch distance is 50 cm but the actual movement of the lower substrate is 49 cm, the metal mask 25 is moved 1 cm in a direction opposite to the transport direction of the substrate.

The reason for enabling position adjustment in the Y direction is to compensate for slight lateral displacement of the lower substrate 13 in the width direction. For example, when the lower substrate is eccentrically shifted about 5 mm toward the left in the width direction, the metal mask 25 is moved 5 mm in the same direction.

The metal mask 25 is designed to be movable in the Z direction for printing of the edible raw material Z. That is, the metal mask 25 is lowered so that a lower surface of the metal mask closely contacts the upper surface of the lower substrate 13, and printing is performed by introducing the edible raw material Z. After printing is completed, the metal mask 25 is raised so that the lower substrate 13 can be transported.

The metal mask position adjusting means includes a fixed frame 26, outer brackets 34, an X driving unit 27, a Y driving unit 28, and a Z driving unit 29.

The fixed frame 26 is a rectangular frame surrounding the metal mask 25 and includes frame cylinders 32 at lower portions of four corners thereof. The frame cylinders 32 are fixed to the support structure 21 and adjust a vertical position of the fixed frame 26. Y rails 26a are horizontally mounted on outer surfaces of both ends of the fixed frame in the X direction and guide movement of sliding connectors 27f in the Y direction.

The outer brackets 34 are bar-shaped members having central portions bent at right angles and horizontally support the metal mask 25 while being positioned opposite each other across the metal mask.

The X driving unit 27 adjusts the position of the metal mask in the X direction and includes an X motor 27a, a lead screw 27b, sliding connectors 27f, connection brackets 27c, and nut blocks 27d.

The X motor 27a is supported by the sliding connector 27f and outputs rotational force while maintaining a horizontal orientation, thereby rotating the lead screw 27b about its axis in either a clockwise direction or a counterclockwise direction. The sliding connector 27f is supported by the Y rail 26a so as to be position-adjustable in the Y direction.

The nut block 27d is engaged with the lead screw 27b and is fixed to the connection bracket 27c. The connection bracket 27c is a member bent in an L-shape, one end of which is fixed to the outer bracket 34. Accordingly, the metal disk 25 moves in the X direction by the operation of the X motor 27a.

The sliding connector 27f positioned on the right side in FIG. 9 is also supported by the Y rail 26a and includes a second Y rail 27g and an X rail 27k on an upper side thereof. The second Y rail 27g is parallel to the Y rail 26a and supports the X rail 27k such that the X rail 27k is position-adjustable in the Y direction. The X rail 27k supports an end of the connection bracket 27c.

Accordingly, the X driving unit 27 is supported by the fixed frame 26 so as to be position-adjustable in the Y direction and moves the metal mask 25 in the X direction through the X motor 27a.

The Y driving unit 28 moves the metal mask 25 in the Y direction and includes a Y motor 28a, a lead screw 28c, and a nut block 28e.

The Y motor 28a is fixed to an inner side of the fixed frame 26 and rotates the lead screw 28c about its axis in both directions. A nut block 28e is engaged with the lead screw 28c. The nut block 28e is a member coupled to the lead screw 28c and is connected to the sliding connector 27f. For this purpose, the fixed frame 26 is provided with a side passage 26g. The side passage 26g is an opening through which the nut block 28e passes.

The nut block 28e moves in the Y direction within the side passage 26g when the Y motor 28a is driven. At this time, the sliding connector 27f connected to the nut block 28e also moves together therewith.

The Z driving unit 29 includes Z cylinders 29a fixed to both ends of the outer brackets 34 and connection arms 29b connecting the Z cylinders 29a to the metal mask 25. The connection arms 29b move vertically according to operation of the Z driving unit 29, thereby moving the metal mask 25 up and down.

As described above, the metal mask 25 is movable in front-rear, left-right, and up-down directions by the X, Y, and Z driving units 27, 28, and 29.

Meanwhile, as shown in FIGS. 13a and 13b, the printing unit 30 supplies the edible raw material Z onto an upper portion of the metal mask 25 and spreads the supplied edible raw material over the metal mask, similar to a silk screen printing process, so that the edible raw material is filled into the printing holes 25c. The edible raw material filled in the printing holes 25c becomes the product that is packaged after drying.

The printing unit 30 includes a pair of parallel rails 31a, a traveling motor 31b, sliders 31c, a reciprocating beam 31d, and a slit die 35.

The parallel rails 31a are structural members extending in the Y direction and support the sliders 31c. The sliders 31c are supported by the parallel rails 31a on both sides and perform sliding movement in the Y direction by receiving power from the traveling motor 31b.

The reciprocating beam 31d is a linear member having both ends connected to the sliders 31c and supports a printing head 33.

The printing head 33 includes a lifting support plate 37, a lifting support plate driving unit, a pair of squeegees 39, and a raw material discharge unit.

The lifting support plate 37 is a horizontal plate installed below the reciprocating beam 31d so as to be movable upward and downward. The vertical movement of the lifting support plate 37 is guided by vertical guide rods 31e. Each vertical guide rod 31e is a vertical round bar having an upper end fixed to the reciprocating beam 31d.

The lifting support plate driving unit serves to repeatedly move the lifting support plate 37 upward and downward. The lifting support plate driving unit includes a servo motor 36a, a belt 36e, a vertical screw 36g, and a nut portion 36h.

The servo motor 36a is installed vertically on a side of the reciprocating beam 31d and includes a driving pulley 36b on its driving shaft. The vertical screw 36g is a vertical shaft rotatably installed on the reciprocating beam 31d and includes a male screw portion 36f at its lower part. A driven pulley 36d is fixed to the vertical screw 36g. The driven pulley 36d is connected to the driving pulley 36b via the belt 36e. When the servo motor 36a is operated, the vertical screw 36g rotates about its axis.

The nut portion 36h is fixed to a lower surface of the lifting support plate 37 and is screw-coupled with the male screw portion 36f. As the vertical screw 36g rotates, the lifting support plate 37 moves upward or downward.

The squeegees 39 are arranged parallel to each other at a lower portion of the lifting support plate 37 and each includes a squeezing blade 39a at a lower end thereof. A blade cylinder 38 is installed above each squeegee 39. Each blade cylinder 38 is fixed to the lifting support plate 37 and moves the corresponding squeegee 39 upward and downward.

The blade cylinders 38 on both sides alternately lower the squeegees. For example, when the left squeegee 39 is lowered in the drawing, the right squeegee 39 is raised, and when the right squeegee 39 is lowered, the left squeegee 39 is raised. When a squeegee 39 is lowered, the squeezing blade 39a comes into line contact with the mask plate 25b of the metal mask 25 as shown in FIG. 13.

The raw material discharge unit is installed between the two squeegees 39 and discharges the paste-state edible raw material supplied from the outside onto the metal mask.

The raw material discharge unit is the slit die 35 having the structure illustrated in FIG. 12.

The slit die 35 includes a first die half 35e, a second die half 35a, and a closing plate 35k. The first die half 35e and the second die half 35a are closely coupled to each other and allow the edible raw material to pass through the interior thereof.

An injection passage 35f is formed in the first die half 35e. The injection passage 35f guides the edible raw material Z supplied through a raw material supply tube 35m (see FIG. 11) to a bank 35b.

The second die half 35a is provided with the bank 35b and discharge slits 35c. The bank 35b is a space where the edible raw material supplied through the injection passage 35f is temporarily collected. The discharge slits 35c form flow passages through which the edible raw material inside the bank 35b is discharged downward. The edible raw material discharged downward is applied onto the mask plate 25b in the form of a band having a predetermined width. The spacing between the discharge slits 35c may correspond to the spacing of the printing holes 25c of the metal mask 25. The closing plate 35k fixes the first die half 35e and the second die half 35a. Depending on the embodiment, the number of discharge slits may vary, and for example, only one discharge slit may be provided.

FIG. 13a illustrates the printing head 33 moving in the direction of arrow R.

Referring to FIG. 13a, the edible raw material Z is discharged from the slit die 35, and the squeegee 39 following the slit die 35 spreads the edible raw material Z on an upper surface of the mask plate 25b in a lowered state. The edible raw material Z is pushed by the squeezing blade 39a and enters the printing holes 25c, thereby being printed onto the lower substrate 13. The squeegee 39 positioned ahead of the slit die 35 remains in a raised state.

After the printing head 33 completely moves in the direction of arrow R, it moves in the opposite direction, that is, in the direction of arrow S, while pushing the edible raw material Z. At this time, the squeegee 39 located on the right side of the slit die 35 in the drawing is lowered, and the squeegee on the left side is raised. While the printing head 33 moves in the direction of arrow S, the right squeezing blade 39a pushes the edible raw material Z and fills the printing holes 25c.

After the printing process described above is completed, the suction horizontal plate 24c is lowered and the metal mask 25 is raised. Thereafter, the lower substrate is moved in the direction of arrow P in FIG. 14 and the above process is repeated.

Meanwhile, the lower substrate 13 passing through the first printing unit 20A sequentially passes through four first drying units 50A. The first printed material 101a printed on the lower substrate 13 is heated and dried while passing through the first drying units 50A. The four first drying units 50A have the same structure and are arranged in series.

The first drying unit 50A includes a cabinet 51, a heater 53, and a temperature sensor 54. The cabinet 51 is a case through which the lower substrate 13 passes and accommodates the heater 53 and the temperature sensor 54.

The temperature sensor 54 detects the temperature of the lower substrate 13 and transmits temperature information to a controller (not shown). The controller adjusts the heating temperature of the heater 53 within an optimal range. The heating method of the heater 53 may be implemented in various forms, such as IR, NIR, MIR, Xeon lamp, laser lamp, UV lamp, LED lamp, and the like.

A pressing roller 55 is further installed inside the cabinet 51. The pressing roller 55 is installed downstream of the suction roll 22 and contacts an upper surface of the lower substrate passing through the suction roll to support the lower substrate downward. The pressing roller 55 is positioned almost in contact with the bottom of the cabinet 51. The angle formed by the lower substrate 13 connecting the suction roll 22 and the pressing roller 55 with respect to a horizontal plane is approximately 60 degrees.

In particular, a passage groove portion 55a and a pressing ring portion 55b are formed on an outer circumferential surface of the pressing roller 55.

The passage groove portion 55a is a groove having a predetermined width and depth formed along the circumferential direction of the pressing roller 55. The first printed material 101a or the laminated body of the first and second printed materials passes through the passage groove portion 55a. The pressing ring portion 55b is a protrusion having a predetermined width extending along the circumferential direction of the pressing roller and presses the lower substrate between printed materials 101a and 101b.

Since the passage groove portion 55a is formed in the pressing roller 55 as described above, even when the lower substrate 13 passes under the pressing roller 55, the first printed material 101a or the laminated body of the first and second printed materials is not subjected to pressure from the pressing roller and therefore is not damaged.

The lower substrate 13 that has sequentially passed through the first drying units 50A passes through the tension maintaining unit 15 and then passes through the second printing unit 20B.

The second printing unit 20B prints a second printed material 101b using the edible raw material supplied from the second raw material supply unit 43b and has the same configuration as the first printing unit 20A. However, while the first printing unit 20A prints the first printed material 101a on a lower substrate on which nothing is printed, the second printing unit 20B differs in that the second printed material 101b is laminated on the already printed first printed material 101a.

The metal mask installed in the second printing unit 20B has the same shape and size as the metal mask 25 of the first printing unit.

The X driving unit 27, Y driving unit 28, and Z driving unit 29 installed in the second printing unit 20B align the printing holes of the metal mask 25 with the upper portion of the first printed material 101a. At this time, the upper surface of the first printed material 101a and the lower surface of the mask plate 25b are located on the same plane.

Accordingly, while the lower substrate 13 passes through the second printing unit 20B, the second printed material 101b is laminated on the first printed material 101a. As shown in FIG. 3, the first printed material 101a and the second printed material 101b are laminated on the upper surface of the lower substrate 13.

The lower substrate passing through the second printing unit 20B is heated and dried while passing through a plurality of second drying units 50B. Thereafter, the lower substrate passes through the tension maintaining unit 15 and then passes through an inspection device 63.

The inspection device 63 detects a laminated state of the second printed material 101b. For example, it determines whether the second printed material 101b is accurately laminated on the upper surface of the first printed material 101a or is misaligned. Inspection result information from the inspection device 63 is transmitted to a controller (not shown). In the controller, it is recorded which row and which column of the laminated bodies are defective.

The upper substrate supply unit 71 supplies an upper substrate 14 corresponding to the lower substrate. A bobbin 72 on which the upper substrate 14 is wound is located inside a housing 71a of the upper substrate supply unit 71. The upper substrate 14 is a film-type substrate having the same size and properties as the lower substrate.

The fusion unit 73 is positioned downstream of the upper substrate supply unit 71 and heat-fuses the upper substrate 14 to the lower substrate 13. The fusion method is conventional. Through the fusion unit 73, the laminated body of the first printed material 101a and the second printed material 101b is individually packaged.

The punching unit 75 is a device that forms holes in the laminated body of the first and second printed materials by operation of the controller. Based on the inspection results transmitted from the inspection device 63, the controller causes the punching unit 75 to punch holes in defective laminated bodies.

A cutting unit 77 is positioned downstream of the punching unit 75. The cutting unit 77 cuts the fused upper and lower substrate laminate to separate the laminated first and second printed materials into individual pieces. Through the cutting unit 77, individually packaged edible products 100 are obtained. At this time, an operator separately collects and discards defective edible products having punched holes.

Although the present invention has been described in detail with reference to specific embodiments, the present invention is not limited thereto, and various modifications may be made by those skilled in the art within the scope of the technical spirit of the present invention.

### [Industrial Applicability]

The present invention is industrially applicable because it provides a film-type edible product having various shapes and thicknesses with excellent commercial value and enables continuous production of film-type edible products having various shapes.

## Claims

1. A film-type edible product manufactured by a screen printing method using a metal mask having a plurality of printing holes formed therein, the film-type edible product comprising:
an edible product body having a predetermined thickness reflecting a shape of the printing holes; and
a packaging material configured to hermetically accommodate the product body.

2. The film-type edible product according to claim 1,
wherein the edible product body has a multilayer structure.

3. An apparatus for manufacturing a film-type edible product, comprising:
a metal mask having a plurality of printing holes formed therein;
a lower substrate supply unit configured to supply a lower substrate below the metal mask;
a printing unit configured to spread a paste-state edible raw material supplied from the outside onto an upper surface of the metal mask so that the edible raw material is printed onto the lower substrate through the printing holes;
a drying unit configured to dry edible printed material printed on the lower substrate;
an upper substrate supply unit configured to supply an upper substrate for covering an upper portion of the lower substrate;
a fusion unit configured to fuse the lower substrate and the upper substrate; and
a cutting unit configured to cut fused upper and lower substrates to separate the edible printed material into individual pieces.

4. The apparatus for manufacturing a film-type edible product according to claim 3,
further comprising a secondary printing unit installed between the drying unit and the fusion unit,
the secondary printing unit being configured to print another edible raw material again on an upper surface of the edible printed material printed on the lower substrate.

5. An apparatus for manufacturing a film-type edible product, comprising:
a lower substrate supply unit configured to supply a lower substrate having a predetermined width;
a first printing unit configured to allow the lower substrate supplied from the lower substrate supply unit to pass therethrough and print a paste-state edible raw material on an upper surface of the lower substrate to obtain a first edible printed material;
a first drying unit configured to heat and dry the first printed material;
a second printing unit configured to allow the lower substrate passing through the first drying unit to pass therethrough and print a paste-state edible raw material on an upper surface of the first printed material so as to laminate a second edible printed material on the first printed material;
a second drying unit configured to heat and dry the second printed material;
an upper substrate supply unit configured to supply an upper substrate corresponding to the lower substrate;
a fusion unit configured to fuse and couple the upper substrate to the lower substrate; and
a cutting unit configured to cut a laminated body of the fused upper and lower substrates so as to separate laminated first and second printed materials into individual pieces.

6. The apparatus for manufacturing a film-type edible product according to claim 5,
wherein an inspection device configured to detect a laminated state of the first printed material and the second printed material is further provided upstream of the fusion unit, and
a punching unit configured to punch holes in the first and second printed materials when the laminated state of the first and second printed materials is determined to be defective according to an inspection result of the inspection device is installed downstream of the fusion unit.

7. The apparatus for manufacturing a film-type edible product according to claim 5,
wherein the first printing unit and the second printing unit comprise:
a support structure providing supporting force;
a transport guide means mounted on the support structure and configured to guide transport of the lower substrate passing through the support structure;
a substrate support part installed below a transport path of the lower substrate and configured to support the lower substrate during printing of the edible raw material;
a metal mask provided above the transport path of the lower substrate so as to be position-adjustable and having a plurality of printing holes through which the edible raw material passes; and
a printing unit configured to supply the edible raw material onto an upper portion of the metal mask and spread the edible raw material over the metal mask so that the edible raw material is filled in the printing holes.

8. The apparatus for manufacturing a film-type edible product according to claim 7,
wherein the transport guide means comprises:
a horizontal holding roll configured to horizontally support the lower substrate between the substrate support part and the metal mask; and
a suction roll installed at a lower height than the horizontal holding roll and configured to transport the lower substrate while adsorbing a lower surface of the lower substrate after the lower substrate passes between the substrate support part and the metal mask.

9. The apparatus for manufacturing a film-type edible product according to claim 8,
wherein the first printed materials are arranged at predetermined intervals in a width direction and a transport direction of the lower substrate, and
a pressing roller is further provided downstream of the suction roll, the pressing roller contacting an upper surface of the lower substrate passing through the suction roll and supporting the lower substrate downward, the pressing roller having a pressing ring portion on an outer circumferential surface thereof that closely contacts the lower substrate while avoiding printed materials on the upper surface of the lower substrate.

10. The apparatus for manufacturing a film-type edible product according to claim 7,
wherein the substrate support part comprises:
a support base fixed to the support structure;
a suction horizontal plate installed above the support base so as to be vertically movable and configured to contact a lower surface of the lower substrate in a raised state and adsorb the lower substrate; and
a suction plate cylinder configured to vertically move the suction horizontal plate.

11. The apparatus for manufacturing a film-type edible product according to claim 7,
wherein the printing unit comprises:
a reciprocating beam reciprocating in a direction orthogonal to a transport direction of the lower substrate;
a lifting support plate mounted on the reciprocating beam so as to be vertically movable;
a pair of squeegees disposed parallel to each other at a lower portion of the lifting support plate and each having a squeezing blade at a lower end thereof;
a blade cylinder configured to alternately lower the squeegees so that the squeezing blade comes into line contact with the metal mask; and
a raw material discharge unit installed between the two squeegees and configured to discharge the paste-state edible raw material supplied from the outside onto an upper surface of the metal mask.

12. The apparatus for manufacturing a film-type edible product according to claim 11,
wherein the raw material discharge unit is a slit die including:
a bank configured to accommodate the edible raw material; and
one or more discharge slits configured to discharge the edible raw material inside the bank in a band shape having a predetermined width.
